# EUROPEAN PATENT APPLICATION

(11) **EP 1 936 456 A2**
(43) Date of publication of application: **25.06.2008**
(21) Application number: 07123294.6
(22) Date of filing: 14.12.2007
(51) Int. Cl.: G05B 19/042

(54) **Method and apparatus to facilitate logic control and interface communication**

(30) Priority: 22.12.2006 US 615569
(71) Applicant: GE Fanuc Automation Americas, Inc., Charlottesville, VA 22911 (US)
(72) Inventor: VARKU, Shrikant Hanumantha, 500003, Andhra Pradesh (IN)
(74) Representative: Bedford, Grant Richard

(57) **Abstract**

A method of distributing programmable control logic includes embedding substantially all of at least one programmable control logic scheme within at least one field device (102). A field device interface is embedded within the field device that includes firmware configured to facilitate execution of at least a portion of a programmable control logic scheme. The programmable control logic scheme is substantially contained within the firmware (104). The at least one field device forms at least a portion of a sensor actuator control network (SAC Net) that also includes at least one embedded actuator interface module (100) and at least one embedded sensor interface module (200). Each of the modules include at least one of the field device interfaces embedded therein. The method also includes providing at least one logical input to the at least one programmable logic control scheme over at least a portion of the SAC Net.

## Description

The present invention relates generally to logic control, and more particularly, to embedded programmable logic control and interface communication.

Many known distributed programmable logic control systems include a plurality of programmable logic controllers (PLCs) or other processor-based configurations, or schemes, that include, but are not limited to, distributed control systems (DCSs). Typically, PLC-based distributed programmable logic control systems have both hardware and software components. Many of such PLC-based distributed control systems are used to manage independent parts of a factory floor, for example, to control a single component, small process or subsystem. PLCs are also used in expanded industrial control system applications to provide coordinated control of equipment, devices, systems and processes. PLCs generally comprise a central processing unit (CPU) and a plurality of input/output (I/O) modules having I/O connection terminals. PLCs are ordinarily connected to input field devices that include, but are not limited to, sensors, switches and measurement devices that provide inputs to the PLC. Such PLCs are also typically connected to output field devices that include, but are not limited to, relays, solenoids and other forms of output to control the field equipment or other controlled elements.

At least some of the requirements for such logic control systems include, but are not limited to, low latency (relatively quick response to a sensed input), robust and reliable control, communication for Supervisory Control and Data Acquisition (SCADA) (including wide area networks, or, WANs), modular and open-ended growth, and low-cost controls solutions. While many of the known schemes satisfy at least some of these requirements, such systems are not configured to satisfactorily meet all of the requirements.

In one aspect according to the present invention, a method of distributing programmable control logic is provided. The method includes embedding substantially all of at least one programmable control logic scheme within at least one field device.

In another aspect, a field device interface is provided. The interface is embedded within a field device including firmware configured to facilitate execution of at least a portion of a programmable control logic scheme. The programmable control logic scheme is substantially contained within the firmware.

In a further aspect, a sensor actuator control network (SAC Net) is provided. The network includes at least one embedded actuator interface module and at least one embedded sensor interface module. The modules include a field device interface embedded within the modules. The interfaces include firmware configured to facilitate execution of at least a portion of a programmable control logic scheme. The programmable control logic scheme is substantially contained within the firmware.

Various aspects and embodiments of the present invention will now be described in connection with the accompanying drawings, in which:
Figure 1 is a block diagram of an exemplary actuator interface module;
Figure 2 is a block diagram of an exemplary discrete sensor interface module;
Figure 3 is a block diagram of an alternative discrete sensor interface module;
Figure 4 is a block diagram of an exemplary analog sensor interface module;
Figure 5 is a block diagram of an alternative analog sensor interface module;
Figure 6 is a block diagram of an exemplary human interface device;
Figure 7 is a block diagram of an exemplary communication interface module; and
Figure 8 is a block diagram of an exemplary sensor actuator control network (SAC Net).

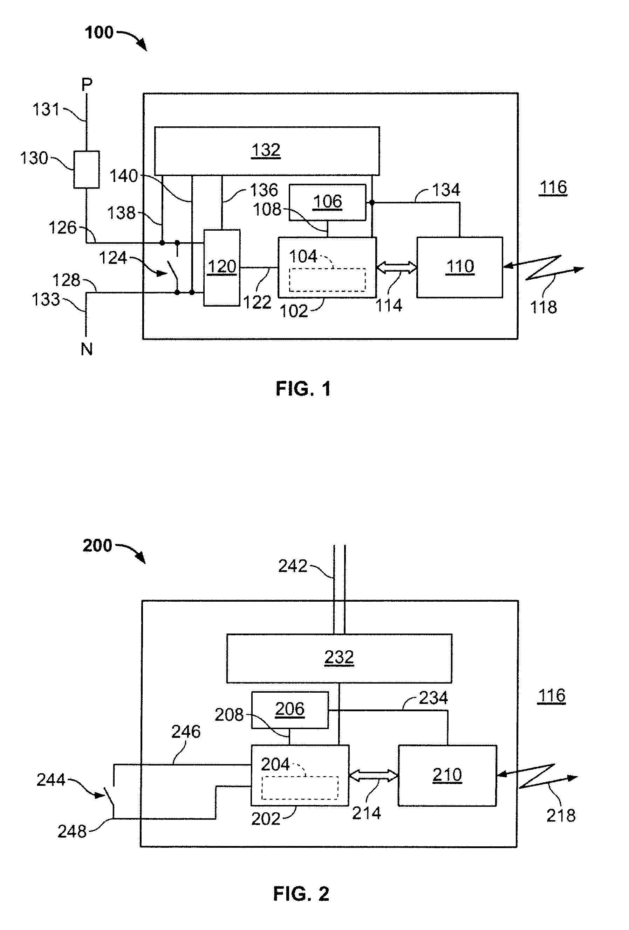

Figure 1 is a block diagram of an exemplary actuator interface module 100. In the exemplary embodiment, module 100 is a circuit card. Alternatively, module 100 has any configuration that facilitates operation of module 100 as described herein. Module 100 includes at least one embedded controller 102. Controller 102 includes firmware 104. Firmware 104 is configured to implement at least a portion of the control logic (not shown) associated with module 100 and to facilitate interface communications. In the exemplary embodiment, the control logic is configured in a manner substantially similar to typical programmable logic controller (PLC) ladder logic using a programming language that includes, but is not limited to, at least a portion of Cimplicity^{®} Machine Edition Logic Developer-PLC, commercially available from GE Fanuc Automation North America, Inc., Charlottesville, Virginia. Alternatively, the control logic is formed using any language in any configuration that facilitates operation of module 100 as described herein. The control logic is field configurable. Embedded controller 102 also includes hardware and software interface configurations (not shown) for interfacing with other components within module 100.

Actuator interface module 100 also includes embedded electrically erasable programmable read-only memory (EEPROM) 106. EEPROM 106 is coupled in data communication with controller 102 via data conduit 108. EEPROM 106 is configured with at least a portion of the parameters required for implementing the control logic in controller 102.

Module 100 further includes at least one radio frequency (RF) transceiver 110 that is coupled in data communication with EEPROM 106 and controller 102 via data conduit 114. In the exemplary embodiment, transceiver 110 is a model MC 13191 RF transceiver commercially available from Freescale Semiconductor Inc., Austin, Texas. Alternatively, transceiver 110 is any model from any manufacturer that facilitates operation of module 100 as described herein. Further, alternatively, transceiver 110 is replaced with any network communications interface device that includes, but is not limited to, a RJ45 twisted pair portal (or jack), a barrel nut connector (BNC) -type coaxial cable jack, a fiber optic connector and/or jack, an infrared (IR) transceiver, an ultra-high frequency (UHF) transceiver, and a microwave transceiver. EEPROM 106 is configured with communication configuration details associated with module 100 that are transmitted to RF transceiver 110 via controller 102 and conduit 114. Also, transceiver 110 is configured to interface with firmware 104 such that all required layers of the open systems interconnection (OSI) model (not shown) are implemented. Moreover, transceiver 110 is configured to interface with firmware 104 such that the IEEE 802.15.4 interface standard for local and metropolitan area networks wireless medium access control (MAC) and physical layer (PHY) for low-rate wireless personal area networks (LR-WPANs) are supported. Furthermore, transceiver 110 is configured to receive from, and transmit to, RF communication media 116 a plurality of digital data signals 118. In the exemplary embodiment, media 116 is air within an industrial facility (not shown) and signals 118 are transmitted and received to and from, respectively, other components associated with module 100 in a network (not shown in Figure 1).

Conduit 114 is configured to transmit a bi-directional serial data stream (not shown) between controller 102 and transceiver 110. Transceiver 110 is configured to receive the serial data stream and to translate such data stream to digital signals 118. Moreover, transceiver 110 is configured to receive digital signals 118 and translate such signals 118 to a serial data stream.

Module 100 also includes at least one switch control gate 120 that is coupled in data communication with controller 102 and is configured to receive discrete output signals (not shown) from controller 102 via data conduit 122. Module 100 further includes an electronic switch 124 that is electrically coupled with gate 120 via an electrically positive conduit 126 and an electrically neutral conduit 128. Switch 124 is configured to shift between an open position (as illustrated in Figure 1) and a closed position (not shown) as a function of discrete output signals transmitted to gate 120 from controller 102 via conduit 122.

In the exemplary embodiment, module 100 is electrically coupled to at least one actuator device 130 via positive conduit 126. Device 130 includes, but is not limited to, a valve actuator, a relay, and a drive motor. Device 130 is configured to energize and de-energize as a function of switch 124 position. Device 130 is electrically coupled to a positive terminal of a power source (not shown) via conduit 131. Conduit 128 is electrically coupled to a conduit 133 that is electrically coupled to a neutral terminal of a power source (not shown). Therefore, in the exemplary embodiment, a complete circuit includes conduit 131, device 130, conduit 126, switch 124, conduit 128 and conduit 133. Alternatively, module 100 is configured to mechanically "click fit" with actuator 130 such that a direct connection of module 100 to actuator 130 is facilitated and electrical connectivity between conduits 131 and 133 via actuator 130 and switch 124 is facilitated without conduits 126 and 128.

Module 100 further includes at least one power supply 132 that includes a power stealing circuit (not shown). Power supply 132 is electrically coupled to controller 102, EEPROM 106 and RF transceiver 110 via at least one electric power conduit 134. Conduit 134 is configured to transmit power associated with operation of controller 102, EEPROM 106, and transceiver 110 from power supply 132. Power supply 132 is coupled in data communication with switch gate 120 via data conduit 136. Switch gate 120 is configured to receive an output control signal (not shown) from power supply 132 via conduit 136, wherein the output control signal includes parameters associated with "open" and "close" commands for switch gate 120. Power supply 132 is also electrically coupled to switch 124 and device 130 via conduits 126 and 128. Power supply 132 is configured to receive and store power from conduits 126 and 128 via electrically positive conduit 138 and electrically negative conduit 140, respectively, when switch 124 is in the open position.

In operation, when switch 124 is in the open position, a circuit is formed between the positive and neutral terminals of the power source via conduit 131, device 130, conduit 126, conduit 138, power supply 132, conduit 140, conduit 128, and conduit 133. During these periods, power supply 132 receives a charging electrical current. Also, in operation, regardless of the position of switch 124, EEPROM 106, controller 102 and RF transceiver 110 receive electrical power from power supply 132 via conduit 134. Further in operation, controller 102 and RF transceiver 110 are in communication with each other and a serial data stream is transmitted between them via conduit 114. Data transmitted from controller 102 to RF transceiver 110 includes, but is not limited to, a status of gate 120, switch 124 and device 130, power supply 132 power levels, and firmware 104 performance. Such data is converted into digital data and transmitted as signals 118 to other devices in the network via media 116. Data 118 transmitted from the network to module 100 is received from media 116 and is converted into a serial data stream via transceiver 110. Such data stream is transmitted to controller 102 via conduit 114 and includes data such as, but not limited to, a desired status of device 130.

Further, during operation, in the event that a change in status of device 130 is commanded by the network, controller 102 receives such command via conduit 114. Firmware 104 communicates with EEPROM 106 via conduit 108 to facilitate processing the associated logic within firmware 104. The associated logic is executed and a discrete close command is transmitted to gate 120 via conduit 122. Gate 120 receives the discrete close command from controller 102 and a plurality of digital signals from power supply 132 via conduit 136 that includes, but is not limited to, a duty cycle and a periodicity of switch 124 openings and closings. Gate 120 shifts switch 124 to the closed position (not illustrated in Figure 1) such that device 130 is energized and electrical current flows from the positive terminal of the power source to the negative terminal of the power source via conduit 131, device 130, conduit 126, switch 124, conduit 128 and conduit 133. During such periods, a portion of module 100 that includes conduits 138 and 140 and power supply 132 are effectively shortcircuited via switch 124 such that electrical charging of power supply 132 is substantially decreased.

Figure 2 is a block diagram of an exemplary discrete sensor interface module 200. Module 200 includes a controller 202 with firmware 204 coupled in data communication with a RF transceiver 210 via a serial data conduit 214. RF transceiver 210 transmits and receives digital data signals 218 that are transmitted through media 116. Module 200 also includes an EEPROM 206 that is coupled in data communication with controller 202 via a data conduit 208. Module 200 further includes a power supply 232 electrically coupled to controller 202, EEPROM 206 and transceiver 210 via power conduit 234. Controller 202, firmware 204, EEPROM 206, conduit 208, transceiver 210, conduit 214, conduit 234 and signals 218 are similar to controller 102, firmware 104, EEPROM 106, conduit 108, transceiver 110, conduit 114, conduit 134 and signals 118, respectively, (all shown in Figure 1) with the exception of the logic and data content contained therein. Power supply 232 is electrically coupled to a power source (not shown) via at least one power conduit 242. Power supply 232 is configured to receive alternating current (AC) and/or direct current (DC) power and convert such power to a DC voltage and DC current suitable for receipt by EEPROM 206, controller 202 and transceiver 210 via conduit 234. In the exemplary embodiment, module 200 is electrically coupled to at least one discrete sensor input device 244 via signal conduits 246 and 248. Alternatively, module 200 is configured to mechanically "click fit" with device 244 such that a direct connection of module 200 to device 244 is facilitated and electrical connectivity between device 244 and controller 202 is facilitated without conduits 246 and 248. Such device 244 includes, but is not limited to, a switch and a contact. Device 244 is illustrated in the open position in Figure 2. EEPROM 206 stores information that includes, but is not limited to, device 244 identification details, for example, type and manufacturer.

In operation, power supply 232 receives a charging electrical current via conduit 242. Power supply 232 converts the power received to electrical power suitable for receipt by EEPROM 206, controller 202 and RF transceiver 210 from power supply 232 via conduit 234. Also, during operation, controller 202 scans device 244 to determine a status and maintains the most recent status within memory. In the event that a change in status of device 244 occurs, i.e., device 244 shifts from the open position to a closed position (not shown in Figure 2), controller 202 scans device 244 and receives an input via conduits 246 and 248. Firmware 204 communicates with EEPROM 206 via conduit 208 to facilitate processing the associated logic within firmware 204. The input signal from device 244 and the associated logic is executed and a serial data stream is transmitted from controller 202 to transceiver 210 via conduit 214. Such data stream is converted to digital signals 218 within transceiver 210 and transmitted into media 116 for receipt by other components within the associated network. Data 218 transmitted from the network to module 200 is received from media 116 and is converted into a serial data stream via transceiver 210. Such data stream is transmitted to controller 202 via conduit 214 and includes data such as, but not limited to, an existing status of other devices in the network and a request for the status of device 244.

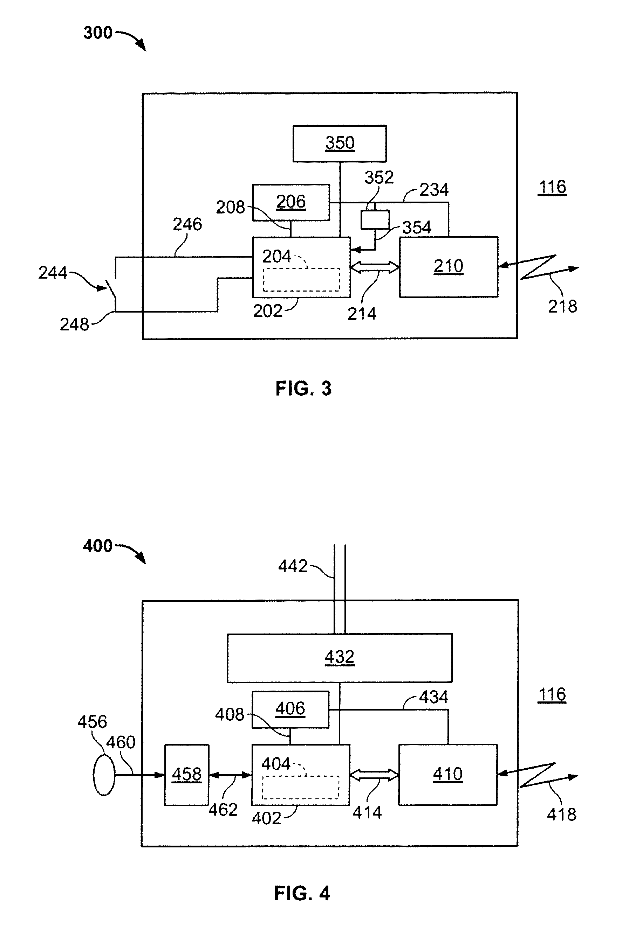

Figure 3 is a block diagram of an alternative discrete sensor interface module 300. Module 300 is similar to module 200 (shown in Figure 2) wherein they both include controller 202 with firmware 204, EEPROM 206 coupled in data communication with controller 202 via conduit 208, and transceiver 210 coupled in data communication with controller 202 via conduit 214. Also, module 300 is electrically coupled to device 244 via conduits 246 and 248. Alternatively, device 244 is directly electrically coupled to controller 202 via a "click fit" configuration, thereby eliminating a need for conduits 246 and 248. Module 300 differs from module 200 by power supply 232 (shown in Figure 2) being replaced with at least one battery 350 that is configured to supply DC power to controller 202, EEPROM 206 and transceiver 210 via power conduit 234. Variants of module 300 may include, but not be limited to, fuel cells and solar cells. Module 300 also includes a battery voltage monitoring circuit 352 that is coupled in data communication with controller 202 via data conduit 354. Circuit 352 is electrically coupled to battery 350 via conduit 234. Module 300 has a benefit over module 200 in that external connections similar to conduits 242 (shown in Figure 2) electrically coupled to a power source are not required. Operation of module 300 is similar to that of module 200 with the exception that electrical power is supplied by battery 350 and battery voltage is monitored by circuit 352. In the event of battery voltage decreasing below a predetermined value, controller 202 transmits a notification signal to the rest of the network via conduit 214 and transceiver 210. Moreover, in order to decrease battery power consumption, module 300 is normally in a hibernation mode, shifts to an active mode to perform its functions, and then shifts back to the hibernation mode. Unlike module 200, such mode shifting limits module 300 functionality as a hub while module 300 may function as a network node.

Figure 4 is a block diagram of an exemplary analog sensor interface module 400. Module 400 includes a controller 402 with firmware 404 coupled in data communication with a RF transceiver 410 via a serial data conduit 414. RF transceiver 410 transmits and receives digital data signals 418 that are transmitted through media 116. Module 400 also includes an EEPROM 406 that is coupled in data communication with controller 402 via a data conduit 408. Module 400 further includes a power supply 432 electrically coupled to controller 402, EEPROM 406 and transceiver 410 via power conduit 434. Controller 402, firmware 404, EEPROM 406, conduit 408, transceiver 410, conduit 414, conduit 434 and signals 418 are similar to controller 202, firmware 204, EEPROM 206, conduit 208, transceiver 210, conduit 214, conduit 234 and signals 218, respectively, (all shown in Figure 2) with the exception of the logic and data content contained therein. Power supply 432 is electrically coupled to a power source (not shown) via at least one power conduit 442. Power supply 432 is configured to receive AC and/or DC power and convert such power to a DC voltage and DC current suitable for receipt by EEPROM 406, controller 402 and transceiver 410 via conduit 434.

Module 400 is electrically coupled to at least one analog sensor input device 456 via an analog-to-digital (A/D) converter 458. Device 456 includes, but is not limited to, thermocouples, pressure transducers, strain gauges, and flow transmitters. A/D converter 458 is configured to receive analog signals from device 456, sample the signals at a predetermined periodicity, and generate digital data signals referenced to the analog signals. In the exemplary embodiment, A/D converter 458 is coupled in data communication with device 456 via a data conduit 460. Alternatively, module 400 is configured such that a "click fit" electrical coupling of device 456 and 458 is facilitated, thereby eliminating a need for conduit 460. Controller 402 is coupled in data communication to A/D converter 458 via a data conduit 462 and is configured to scan and sample A/D converter 458 via conduit 462. Moreover, controller 402 is configured to receive the output of converter 458 with a predetermined periodicity and convert the data to an equivalent serial data stream that is transmitted to transceiver 410 via conduit 414. EEPROM 406 stores information that includes, but is not limited to, device 456 identification details, for example, type and manufacturer.

In operation, power supply 432 receives a charging electrical current via conduit 442. Power supply 432 converts the power received to electrical power suitable for receipt by EEPROM 406, controller 402 and RF transceiver 410 from power supply 432 via conduit 434. Also, during operation, device 456 generates analog data signals that include, but are not limited to, instantaneous, average, root mean squared (RMS), or peak voltage, frequency, temperature, pressure, and flow rate. The analog signals are transmitted to A/D device 458 via conduit 460 wherein the analog signals are sampled at a predetermined rate and the sampled analog values are converted to equivalent digital data signals. The digital data signals are transmitted to controller 402 via conduit 462 at a predetermined periodicity, wherein such periodicity may be determined based on a predetermined change in the values measured by device 456, an automated sampling scheme, and/or when queried by another network device via media 116 and transceiver 410.

Also, during operation, when controller 402 receives data transmitted from device 458, firmware 404 communicates with EEPROM 406 via conduit 408 to facilitate processing the associated logic within firmware 404. Such processing includes, but is not limited to, digital filtering, averaging, RMS or peak value calculating. The input signal from device 458 and the associated logic is executed and a serial data stream is transmitted from controller 402 to transceiver 410 via conduit 414. Such data stream is converted to digital signals 418 within transceiver 410 and transmitted into media 116 for receipt by other components within the associated network. Data 418 transmitted from the network to module 400 is received from media 116 and is converted into a serial data stream via transceiver 410. Such data stream is transmitted to controller 402 via conduit 414 and includes data such as, but not limited to, an existing status of other devices in the network and a request for the status of device 456.

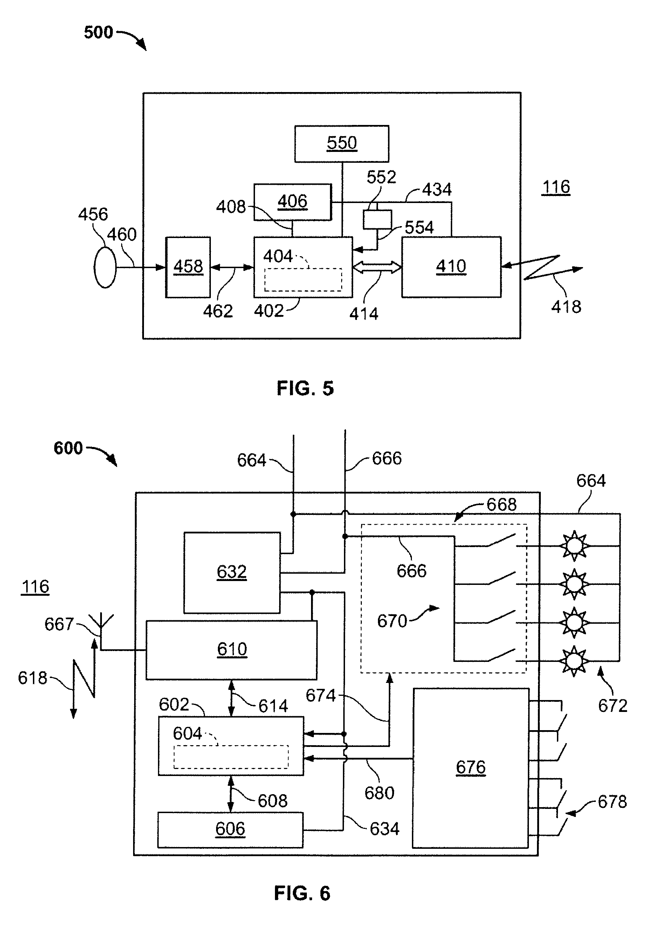

Figure 5 is a block diagram of an alternative analog sensor interface module 500. Module 500 is similar to module 400 (shown in Figure 4) wherein they both include controller 402 with firmware 404, EEPROM 406 coupled in data communication with controller 402 via conduit 408, transceiver 410 coupled in data communication with controller 402 via conduit 414. Also, in this alternative embodiment, module 500 is coupled in data communication with device 456 via device 458 and conduits 460 and 462. Alternatively, module 500 is configured such that a "click fit" electrical coupling of device 456 and 458 is facilitated, thereby eliminating a need for conduit 460. Module 500 differs from module 400 by power supply 432 (shown in Figure 4) being replaced with at least one battery 550 that is configured to supply DC power to controller 402, EEPROM 406 and transceiver 410 via power conduit 434. Variants of module 500 may include, but not be limited to, fuel cells and solar cells. Module 500 also includes a battery voltage monitoring circuit 552 that is coupled in data communication with controller 402 via data conduit 554. Circuit 552 is electrically coupled to battery 550 via conduit 434. Module 500 has a benefit over module 400 in that external connections similar to conduits 442 (shown in Figure 4) electrically coupled to a power source are not required. Operation of module 500 is similar to that of module 400 with the exception that electrical power is supplied by battery 550 and battery voltage is monitored by circuit 552. In the event of battery voltage decreasing below a predetermined value, controller 402 transmits a notification signal to the rest of the network via conduit 414 and transceiver 410. Moreover, in order to decrease battery power consumption, module 500 is normally in a hibernation mode, shifts to an active mode to perform its functions, and then shifts back to the hibernation mode. Unlike module 400, such mode shifting limits module 500 functionality as a hub while module 500 may function as a network node.

Figure 6 is a block diagram of an exemplary human interface device (HID) 600. HID 600 includes a controller 602 with firmware 604 coupled in data communication with a RF transceiver 610 via a serial data conduit 614. RF transceiver 610 transmits and receives digital data signals 618 that are transmitted through media 116. HID 600 also includes an EEPROM 606 that is coupled in data communication with controller 602 via a data conduit 608. HID 600 further includes a power supply 632 electrically coupled to controller 602, EEPROM 606 and transceiver 610 via power conduit 634. Controller 602, firmware 604, EEPROM 606, conduit 608, transceiver 610, conduit 614, conduit 634 and signals 618 are similar to controller 202, firmware 204, EEPROM 206, conduit 208, transceiver 210, conduit 214, conduit 234 and signals 218, respectively, (all shown in Figure 2) with the exception of the logic and data content contained therein. For example, firmware 604 includes debounce logic and the necessary logic to implement a communication protocol. Moreover, firmware 604 includes a network address of HID 600 and other network details as well as HID 600 manufacturer, model and type details. Power supply 632 is electrically coupled to a power source (not shown) via an electrically positive conduit 664 and an electrically neutral conduit 666. Power supply 632 is configured to receive AC and/or DC power and convert such power to a DC voltage and DC current suitable for receipt by EEPROM 606, controller 602 and transceiver 610 via conduit 634. HID 600 further includes a radio frequency (RF) antenna 667 coupled in data communication with transceiver 610.

HID 600 also includes at least one electronic switch module 668. Module 668 includes a plurality of electronic switches 670 electrically coupled to conduit 666. Switches 670 are illustrated in Figure 6 in the open position. Module 668 also includes a plurality of lamp indicators 672, wherein each lamp indicator 672 is electrically coupled to an associated switch 670 and is configured such that a switch 670 shifting to a closed position (not shown in Figure 6) energizes the associated lamp 672. Lamp indicators 672 are electrically coupled to conduit 664. Module 668 is coupled in data communication to controller 602 via a data conduit 674.

HID 600 further includes at least one keyboard interface module 676. Module 676 includes a plurality of input keys 678 wherein, in the exemplary embodiment, such keys 678 include, but are not limited to, START and STOP keys. Alternatively, keys 678 include, but are not limited to, QWERTY-type keyboard keys, ON/OFF touch pads, and touch screen icons. Module 676 is coupled in data communication with controller 602 via conduit 680. Variants of HID 600 include, but are not limited to, liquid crystal diode (LCD) displays, touch screen features, cathode ray tube (CRT) monitors, batteries, fuel cells and solar cells.

In operation, power supply 632 receives a charging electrical current via conduits 664 and 666. Power supply 632 converts the power received to electrical power suitable for receipt by EEPROM 606, controller 602 and RF transceiver 610 from power supply 632 via conduit 634. Controller 602 scans input keys 678 via keyboard interface module 676 and data conduit 680, executes the debounce logic and records a closed key 678. Controller 602 receives the closed key input signal via conduit 680, converts the signal to a serial data stream and transmits the steam to transceiver 610 via conduit 614. Transceiver 610 converts the stream to a digital data signal 618, or message, that is transmitted into media 116 via antenna 667, and through media 116 to an actuator interface module (not shown) similar to that shown in Figure 1. Embedded controller 602 uses the network and HID 600 details stored within firmware 604 and EEPROM 606 to communicate with other devices within the network.

Also, in operation, transceiver 610 receives digital data 618, or message, from other network devices via media 116 and antenna 667. Transceiver 610 converts the message to a serial data stream and transmits the stream to controller 602. Controller 602 receives the message and the logic within controller 602 validates the message for acceptance by HID 600. If the accepted message includes a command for energizing one or more lamps 672, controller 602 executes the command within the logic, transmits a signal through conduit 674, and closes the appropriate switch 670, thereby completing an electrical circuit between power conduits 664 and 666 and energizing the appropriate lamp 672. Deenergizing lamps 672 may be performed in a similar manner.

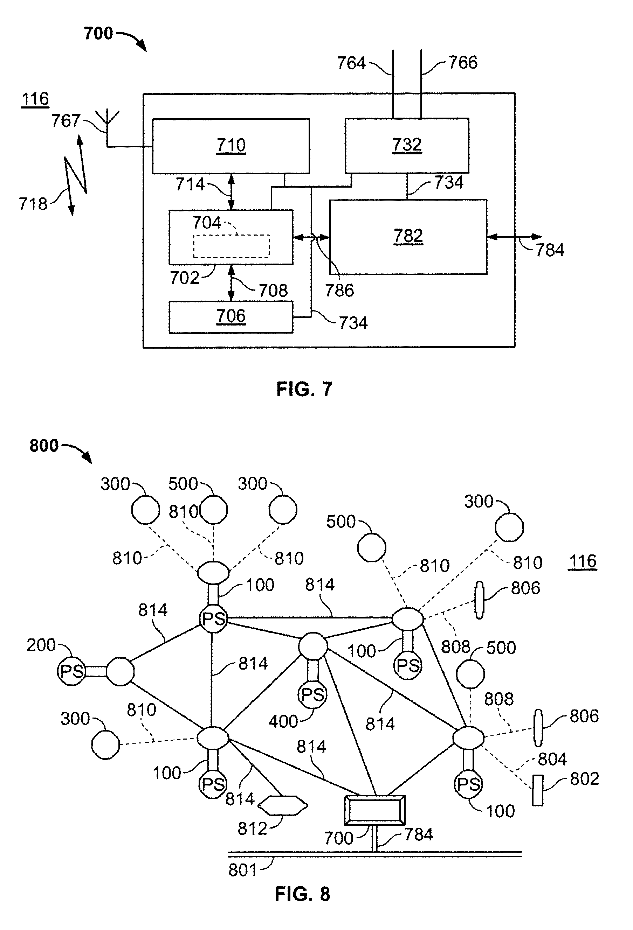

Figure 7 is a block diagram of an exemplary communication interface module 700. Module 700 includes a controller 702 with firmware 704 coupled in data communication with a RF transceiver 710 via a serial data conduit 714. RF transceiver 710 transmits and receives digital data signals 718 that are transmitted through media 116. Module 700 also includes an EEPROM 706 that is coupled in data communication with controller 702 via a data conduit 708. Module 700 further includes a power supply 732 electrically coupled to controller 702, EEPROM 706 and transceiver 710 via power conduit 734. Controller 702, firmware 704, EEPROM 706, conduit 708, transceiver 710, conduit 714, conduit 734, antenna 767 and signals 718 are similar to controller 602, firmware 604, EEPROM 606, conduit 608, transceiver 610, conduit 614, conduit 634, antenna 667 and signals 618, respectively, (all shown in Figure 6) with the exception of the logic and data content contained therein. For example, firmware 704 includes the necessary logic to implement a communication protocol, a network address of module 700 and other network details as well as module 700 manufacturer, model and type details. Power supply 732 is electrically coupled to a power source (not shown) via an electrically positive conduit 764 and an electrically neutral conduit 766. Power supply 732 is configured to receive AC and/or DC power and convert such power to a DC voltage and DC current suitable for receipt by EEPROM 706, controller 702 and transceiver 710 via conduit 734.

Module 700 also includes at least one external communication interface 782. Interface 782 is coupled in data communication with controller 702 via a data conduit 786. Interface 782 is also electrically coupled to power supply 732 via conduit 734. In the exemplary embodiment, interface 782 is a hardware transceiver interface to an external wired or wireless link 784. Alternatively, interface 782 is any device that facilitates communication with devices external to the network, including, but not limited to, a separate processor (not shown). Link 784 includes, but is not limited to, any LAN, WAN, or interface to a PLC.

In operation, power supply 732 receives a charging electrical current via conduits 764 and 766. Power supply 732 converts the power received to electrical power suitable for receipt by EEPROM 706, controller 702 RF transceiver 710, and interface 782 from power supply 732 via conduit 734. Controller 702 receives communications from link 784 via interface 782 and conduit 786, converts the signal to a serial data stream and transmits the steam to transceiver 710 via conduit 714. Transceiver 710 converts the stream to a digital data signal 718 that is transmitted into media 116 via antenna 767, and through media 116 to any other device on the associated network. Embedded controller 702 uses the network and module 700 details stored within firmware 704 and EEPROM 706 to communicate with other devices within the network.

Also, in operation, transceiver 710 receives digital data 718 from other network devices via media 116 and antenna 767. Transceiver 710 converts the data to a serial data stream and transmits the stream to controller 702. Controller 702 receives the data and the logic within controller 702 generates a signal that is transmitted through conduit 786 to interface 782 for further transmission through link 784. In this manner, two-way communications between the network devices and any external devices and networks is facilitated. Moreover, interface module 700 may be configured to operate as a server supporting multiple clients or a client supported by a network server (neither shown). Furthermore, interface module 700 may be configured to support remote I/O functionality as an interface to a PLC (not shown).

Figure 8 is a block diagram of an exemplary sensor actuator control network (SAC Net) 800. Network 800 includes at least one actuator interface module 100, at least one line-powered discrete sensor interface module 200, at least one battery-powered discrete sensor interface module 300, at least one line-powered analog sensor interface module 400, at least one battery-powered analog sensor interface module 500, and at least one communication interface module 700. Module 700 is coupled in data communication with a network 801 via link 784. In the exemplary embodiment, network 801 is an Ethernet-based LAN. Alternatively, network 801 has any type of network topology configured to facilitate operation of network 800 as described herein including, but not limited to, shielded and/or unshielded twisted pair, coaxial cable, fiber optic, infrared (IR), ultra-high frequency (UHF), and microwave topologies.

Network 800 also includes at least one mobile human interface device 802. Device 802 is coupled in data communication with network 800 via a mobile link 804. In the exemplary embodiment, device 802 is a portable laptop (notebook) computer configured with software that facilitates accessing network 800 through a plurality of predetermined portals. Alternatively, device 802 is any device that facilitates operation of network 800 as described herein including, but not limited to, a panel-mounted operator interface station (OIS) or a desktop computer that uses a device similar to module 100 as the portal. Further, alternatively, device 802 may be a portable, hand-held device. Device 802 may be configured to include a device similar to HID 600.

Network 800 further includes at least one temporary, battery-powered device 806 that is coupled in data communication with network 800 via a weak unidirectional link 808 with at least one module 100. Device 806 typically includes devices that may be constrained due to cost and/or size. Such devices may a RF transmitter (not shown) only instead of a transceiver that is typically used within the components of network 800. Moreover, such devices are typically configured to be non-permanent components within the topology of network 800. Device 806 includes, but is not limited to, devices such as key fobs, emergency pushbuttons, and location service devices. Device 806 may be configured to include a device similar to HID 600.

Network 800 also includes a plurality of weak single-hop links 810. Such single-hop links 810 are RF links formed between devices such as modules 300 and 500 and modules 100. Network 800 further includes at least one stationary human interface device 812. Device 812 is coupled in data communication with network 800 via a main multi-hop link 814. In the exemplary embodiment, device 812 is a desktop computer that uses a device similar to module 100 as the portal. Alternatively, device 812 is any device that facilitates operation of network 800 as described herein including, but not limited to, a panel-mounted operator interface station (OIS). Device 812 may be configured to include a device similar to HID 600. Multi-hop links 814 generally include a group of communication devices that include a source transmitter, a receiver, a re-transmitter, and another receiver. Such devices are configured to form a communications chain and a plurality of communications chains forms a communications network. In the exemplary embodiment, network 800 includes a plurality of multi-hop links 814. Multi-hop links 814 differ from weak single-hop links 810 with respect to signal strength, directionality and range.

Network 800 may be configured to have a lower overhead network traffic throughput than typical networks which facilitates robust control. Moreover, distributing the control logic within the network sensing and actuation components reduces exposure to decreasing network availability via a single point of failure, thereby increasing network reliability. Furthermore, distributing the control logic within the network components decreases latency by increasing a rate of response to sensed inputs and output commands. Also, distributing network communication features throughout the network's devices provides sufficient opportunities for access to the network via a LAN or WAN for SCADA. The network may also be characterized as modular with a potential for open-ended growth in that additional multi-hop linking facilitates adding sub-systems to the network and/or interfacing one network with additional networks. Moreover, decreasing a reliance on larger, more expensive, centralized components coupled in data communication via extensive cabling facilitates reducing costs of procurement and installation.

An exemplary method of distributing programmable control logic includes embedding substantially all of at least one programmable control logic scheme within at least one field device within a network.

Network 800 may be defined as a plurality of layers wherein such layers are defined by a classification of devices, or nodes, wherein each type of node has a predetermined set of characteristics of varying complexity and functionality. Specifically, modules 100 are powered from a source that energizes the associated actuator 130 (not shown in Figure 8) such that modules 100 have little power restrictions. Modules 100 have PLC functionality embedded within them and therefore can act as stand-alone network nodes. Modules 100 control their associated actuator 130 based on inputs received from other nodes throughout the network. Such nodes include other actuator modules 100 and sensor nodes formed from modules 200, 300, 400 and 500. Modules 100 support network 800 functionality up to a transport layer within the OSI model. Network 800 facilitates features that include, but are not limited to, multi-hopping, network auto-reconfiguring and network monitoring. Network 800 also facilitates transmission of signals from sensor modules 300 and 500 via a weak link 808 by repeating the associated data over the network.

Network 800 is configured with additional nodes wherein modules 200 and 400 are categorized as Class 0 sensor nodes. Such Class 0 nodes may be configured to provide full network functionality. Moreover, such Class 0 nodes may include modules similar to modules 200 and 400 configured without sensors such that they operate as multi-hop repeater nodes. Also, specifically, modules 300 and 500 are classified as Class 1 sensor nodes. Such Class 1 nodes are powered via batteries and are typically constrained in terms of cost, size and power availability. Moreover, such Class 1 nodes are typically positioned at a periphery of a network and are not configured to be part of a multi-hop chain. Further, specifically, temporary battery-powered devices 806 are classified as Class 2 sensor nodes. Such Class 2 nodes are typically not configured for a multi-hop chain and supervision. However, Class 2 devices may be configured to issue messages that are received and forwarded by other nodes in the network.

The methods and apparatus for embedding programmable logic control and interface communication as described herein facilitates operation of control systems and communications networks. Specifically, configuring a network with distributed, embedded logic control and communication features decreases a potential for network single point failures and a subsequent performance degradation. More specifically, configuring the associated network components with localized logic control features increases the independence of such components from centralized processors. Such configuration also facilitates scheduling maintenance outages for individual network components to troubleshoot, repair and/or replace the associated component without necessitating wider network outages, thereby reducing the total cost of ownership of the system being monitored. Moreover, the method and equipment for operating networks as described herein facilitates reducing hardware procurement, installation, and configuration, therefore reducing capital and labor costs associated with installing such networks. Specifically, configuring the network components with independent communications features facilitates decreasing installation and maintenance costs by decreasing the amount of interconnecting cabling and wiring.

Exemplary embodiments of embedding programmable logic control and interface communication are described above in detail. The methods, apparatus and systems are not limited to the specific embodiments described herein nor to the specific illustrated networks and network components.

While the invention has been described in terms of various specific embodiments, those skilled in the art will recognize that the invention can be practiced with modification within the spirit and scope of the claims.

## Claims

1. A method of distributing programmable control logic, said method comprising embedding substantially all of at least one programmable control logic scheme within at least one field device (102).

2. A method in accordance with Claim 1 wherein embedding substantially all of at least one programmable control logic scheme within at least one field device (102) comprises:
providing a plurality of field devices;
embedding firmware (104) within each of the plurality of field devices; and
downloading at least one programmable logic control scheme to the firmware.

3. A method in accordance with Claim 1 or Claim 2 further comprising:
providing at least one network communications interface device for each of the plurality of field devices (102), the at least one network communications interface device includes at least one of:
at least one radio frequency (RF) transceiver;
at least one twisted pair portal;
at least one coaxial cable portal;
at least one fiber optic portal;
at least one ultra-high frequency (UHF) transceiver;
at least one infrared (IR) transceiver; and
at least one microwave transceiver;
coupling the at least one network communications interface device in data communication with at least one of the firmware and the EEPROM for each of the plurality of field devices;
coupling a plurality of field devices in data communication with each other via the associated network communications interface devices; and
transmitting and receiving operational data between each of the plurality of field devices via the associated network communications interface devices.

4. A field device interface embedded within a field device (102) comprising firmware (104) configured to facilitate execution of at least a portion of a programmable control logic scheme, wherein said programmable control logic scheme is substantially contained within said firmware.

5. A field device interface in accordance with Claim 4 wherein at least a portion of said firmware (104) is configured to implement at least a portion of said programmable control logic scheme and at least a portion of a communication interface scheme.

6. A field device interface in accordance with Claim 4 or Claim 5 further comprising at least one of:
at least one embedded actuator interface module (100);
at least one embedded sensor interface module (200);
at least one embedded human interface device; and
at least one communication interface module.

7. A field device interface in accordance with any of Claims 4 to 6 further comprising at least one network communications interface device coupled in data communication with at least one of said firmware (104) and at least one additional network communications interface device, wherein each of said network communications interface devices comprises at least one of:
at least one radio frequency (RF) transceiver;
at least one twisted pair portal;
at least one coaxial cable portal;
at least one fiber optic portal;
at least one ultra-high frequency (UHF) transceiver;
at least one infrared (IR) transceiver; and
at least one microwave transceiver.

8. A sensor actuator control network (SAC Net) comprising at least one embedded actuator interface module (100) and at least one embedded sensor interface module (200), wherein said modules comprise a field device interface embedded within said modules, said interfaces comprise firmware (104) configured to facilitate execution of at least a portion of a programmable control logic scheme, wherein said programmable control logic scheme is substantially contained within said firmware.

9. A SAC Net in accordance with Claim 8 further comprising at least one of:
at least one power supply apparatus electrically coupled to at least one external power source;
at least one independent, self-contained power source;
at least one embedded human interface device; and
at least one communication interface module.

10. A SAC Net in accordance with Claim 8 or Claim 9 further comprising at least one network communications interface device coupled in data communication with at least one of said firmware (104) and at least one additional network communications interface device, wherein each of said network communications interface devices comprises at least one of:
at least one radio frequency (RF) transceiver;
at least one twisted pair portal;
at least one coaxial cable portal;
at least one fiber optic portal;
at least one ultra-high frequency (UHF) transceiver;
at least one infrared (IR) transceiver; and
at least one microwave transceiver.
